# EUROPÄISCHE PATENTANMELDUNG

(11) **EP 4 167 073 A1**
(43) Veröffentlichungstag der Anmeldung: **19.04.2023**
(21) Anmeldenummer: 22201728.7
(22) Anmeldetag: 14.10.2022
(51) Int. Cl.: G06F 3/14, H04N 9/67, G06F 40/169, H04L 12/18, H04L 65/403, H04N 7/15

(54) **VERFAHREN ZUR STEUERUNG EINER WHITEBOARD-FUNKTION EINES GERICHTSSAAL-MEDIENSYSTEMS**

(30) Priorität: 14.10.2021 DE 102021126612; 05.04.2022 DE 102022108121
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zur Steuerung einer Anzeigeeinrichtung mit Whiteboard-Funktion mit den Verfahrensschritten Ausgabe von Bildinhalten auf einer Ausgabeeinrichtung, Bereitstellen einer Whiteboard-Funktion zum Hinzufügen von Bildinhalten zu dem ausgegebenen Bildinhalt und Speichern der annotierten Bildinhalte, wobei das Speichern der annotierten Bildinhalte über einen Client ausgelöst wird, dessen Ausgabeeinrichtung im Moment des Auslösens des Speicherns ausschließlich andere als die annotierten Bildinhalte ausgibt, sowie ein Gerichtssaal-Mediensystem.

## Beschreibung

Die Erfindung betrifft ein Verfahren zur Steuerung einer Anzeigeeinrichtung mit Whiteboard-Funktion mit den Verfahrensschritten Ausgabe von Bildinhalten auf einer Ausgabeeinrichtung, Bereitstellen einer Whiteboard-Funktion zum Hinzufügen von Bildinhalten zu dem ausgegebenen Bildinhalt und Speichern der annotierten Bildinhalte, wobei das Speichern der annotierten Bildinhalte über einen Client ausgelöst wird, dessen Ausgabeeinrichtung im Moment des Auslösens des Speicherns ausschließlich andere als die annotierten Bildinhalte ausgibt, sowie ein Gerichtssaal-Mediensystem.

### Stand der Technik

Im Stand der Technik sind Whiteboards, Display mit einer Whiteboard-Funktion und auch Anwendungen für Videokonferenzen mit einer Whiteboard-Funktion bekannt, bei denen dargestellte Inhalte editiert werden können.

Klassische Whiteboards verfügen über eine zumeist weiße Oberfläche, die mit speziellen Stiften beschrieben werden können. Das entstandene Bild kann dann ausgedruckt oder gespeichert werden.

Interaktive Whiteboards sind eine Kombination aus einer Anzeigeeinrichtung mit einer Whiteboard-Funktion. Häufig wird ein Beamer mit einem klassischen Whiteboard kombiniert, aber auch Displays mit einer touchsensitiven Oberfläche sind bekannt. Diese Anzeigen sind mit einem Computer gekoppelt, über den die Anzeigeeinrichtung und das Whiteboard oder die Whiteboard-Funktion gesteuert werden kann. So können auch neu kreierte Bildinhalte gespeichert werden.

Weiterhin sind sogenannte kollaborative Whiteboards bekannt, die es gestatten, dass mehrere Nutzer auf die Whiteboard-Funktion Zugriff haben und so zumeist über ein Netzwerk gemeinsam an einem Dokument arbeiten können.

Nachteil an den gegenwärtigen Lösungen ist, dass annotierte Inhalte nur dann von der Quelle, also dem Whiteboard selbst, speicherbar sind. In Gerichtssälen beispielsweise wäre ein Zeuge oder Gutachter, der für seine Aussage oder zur Klärung eines Sachverhaltes aus seinem Gutachten ein Whiteboard zur Hilfe nimmt, derjenige Nutzer, der diese Inhalte in der Gerichtsakte zu speichern hat. Diesen Zugriff wird man aber schon aus Datenschutzgründen sicher nicht gewähren wollen.

Daher liegt der Erfindung die Aufgabe zugrunde, ein Verfahren zur Steuerung einer Anzeigeeinrichtung mit Whiteboard-Funktion bereitzustellen, das die Nachteile des Standes der Technik überwindet. Es ist weiterhin Aufgabe der Erfindung, ein Gerichtssaal-Mediensystem bereitzustellen, das es einem Nutzer ermöglicht, annotierte Inhalte einer Anzeigeeinrichtung mit einer Whiteboard-Funktion zu speichern.

Die Aufgabe wird mittels des Verfahrens zur Darstellung von Inhalten auf einer Ausgabeeinrichtung eines Gerichtssaales gelöst. Vorteilhafte Ausführungen der Erfindung sind in den Unteransprüchen dargelegt.

Bei der vorliegenden Erfindung wird hierfür ein Verfahren zur Steuerung einer Anzeigeeinrichtung mit Whiteboard-Funktion mit den Verfahrensschritten Ausgabe von Bildinhalten auf einer Anzeigeeinrichtung, Bereitstellen einer Whiteboard-Funktion zum Hinzufügen von Bildinhalten zu dem ausgegebenen Bildinhalt und Speichern der annotierten Bildinhalte bereit gestellt, wobei das Speichern der annotierten Bildinhalte über einen Client ausgelöst wird, dessen Ausgabeeinrichtung im Moment des Auslösens des Speicherns ausschließlich andere als die annotierten Bildinhalte ausgibt.

Eine Anzeigeeinrichtung im Rahmen dieser Schrift ist eine Einrichtung, die vorzugsweise Bildinhalte ausgibt, z.B. Standbilder und/oder Videosequenzen. Die Anzeigeeinrichtung kann auch dazu eingerichtet sein, zusätzlich zu den Bildinhalten Toninhalte auszugeben. In einer Weiterbildung kann die Anzeigeeinrichtung ausschließlich Toninhalte ausgeben, z.B. eine gesprochene Aussage eines Zeugen.

In gleicher Weise ist ein annotierter Bildinhalt im Rahmen dieser Schrift vorzugsweise ein Bildinhalt, der graphisch/optisch annotiert ist, z.B. mit einer Beschriftung und/oder Symbolen. Der annotierte Bildinhalt kann auch ein Bildinhalt sein, der graphisch/optisch und/oder akustisch annotiert ist, z.B. mit einem gesprochenen Kommentar eines Prozessbeteiligten. In einer Weiterbildung kann der annotierte Bildinhalt ein Bild- und Toninhalt sein, der graphisch/optisch und/oder akustisch annotiert ist. In einer weiteren Ausführung kann der annotierte Bildinhalt ein Toninhalt sein, der graphisch/optisch und/oder akustisch annotiert ist.

In einer Weiterbildung der Erfindung wird die Whiteboard-Funktion über eine zentrale Steuereinheit bereitgestellt, die mit der Anzeigeeinrichtung mit Whiteboard-Funktion gekoppelt ist. Die Steuereinheit steuert in einer weiteren Ausführung der Erfindung die Ausgabeinhalte auf der Ausgabeeinrichtung mit Whiteboard-Funktion und die Whiteboard-Funktion zur Annotation der Bildinhalte der Ausgabeeinrichtung mit Whiteboard-Funktion.

In einer optionalen Ausgestaltung der Erfindung wird die Speicherung des Bildinhaltes der Anzeigeeinrichtung mit Whiteboard-Funktion von einem mit der zentralen Steuereinheit verbundenen Master-Client ausgelöst. Das hat zum einen den Vorteil, dass so der Zugriff auf die Funktion der Speicherung der annotierten Bildinhalte nicht auf denjenigen übertragen werden muss, der die Bildinhalte annotiert, zum anderen besteht so die Möglichkeit von unbeteiligter Seite eine Sicherung der annotierten Bildinhalte durchzuführen.

In einer erfindungsgemäßen Ausgestaltung umfasst der Client eine Ausgabeeinrichtung und eine Eingabeeinrichtung. In einer erfindungsgemäßen Weiterbildung ist der Client darüber hinaus mit einer Speichervorrichtung verbunden. Der Client kann beispielsweise ein Laptop sein, das über eine Schnittstelle mit einem Netzwerk verbunden ist.

In einer weiteren Ausgestaltung der Erfindung wird der annotierte Bildinhalt auf der Speichereinrichtung des Clients gespeichert. Die Speichereinrichtung des Clients kann eine im Client selbst verbaute Festplatte oder Speicher sein

In einer weiteren Ausführung der Erfindung ist die Speichereinrichtung ein mit dem Client verbundenes Netzwerklaufwerk. Der annotierte Bildinhalt kann auch extern angeordnetes und mit dem Client verbundenes Netzwerklaufwerk sein, z.B. eine Cloud.

In einer Weiterbildung der Erfindung wird auf der Ausgabeeinrichtung des Clients Bildinhalte angezeigt, die von den Bildinhalten der Ausgabeeinrichtung mit Whiteboard-Funktion verschieden sind.

In einer optionalen Ausgestaltung der Erfindung wird die Speicherung der annotierten Bildinhalte von einem Control-Panel mit eigenem Display ausgelöst. Über das Bedienelement des Control-Panels kann der Bediener des Control-Panels die Speicherung der annotierten Bildinhalte steuern.

In einer weiteren Ausbildung der Erfindung steuert das Control-Panel die Anzeigeinhalte weiterer Ausgabeeinrichtungen. Ein Bediener kann mittels des Control-Panels einen oder mehrere Anschlüsse als Quellen eines Bild- und/oder Toninhaltes auswählen und ein oder mehrere Anschlüsse als Ausgabeeinrichtungen auswählen, über die der empfangene Bild- und/oder Toninhalt ausgegeben wird.

In einer weiteren Ausführung der Erfindung umfassen die weiteren Ausgabeeinrichtungen solche Ausgabeeinrichtungen, die von einer Mehrzahl von Positionen eines Gerichtssaales einsehbar sind. Die Ausgabeeinrichtungen sind in unterschiedlichen Positionen in einem Gerichtssaal angeordnet, wobei die Ausgabeeinrichtungen sowohl für die Öffentlichkeit vorgesehene als auch vertrauliche Anzeigeinhalte ausgeben.

In einer Weiterbildung der Erfindung umfassen die Positionen die Richterbank, die Klägerbereich, den Beklagten- oder Angeklagtenbereich, den Zeugenstand und/oder den Zuschauerbereich. Die Ausgabeeinrichtungen sind derart angeordnet, dass auf unterschiedlichen Ausgabeeinrichtungen jeweils unterschiedliche Anzeigeinhalte dargestellt werden.

In einer weiteren Ausgestaltung der Erfindung werden auf den weiteren Ausgabeeinrichtungen Bildinhalte der Anzeigeeinrichtung mit Whiteboard-Funktion gespiegelt. Der auf der Anzeigeeinrichtung mit Whiteboard-Funktion annotierte Bildinhalt kann auf einer oder allen Ausgabeeinrichtungen gespiegelt und angezeigt werden. Über das Control-Panel kann ein Bediener die gewünschte Anzeigeeinrichtungen auswählen.

Die Aufgabe wird weiterhin mittels des erfindungsgemäßen Gerichtssaal-Mediensystems mit einer Anzeigeeinrichtung mit Whiteboard-Funktion gelöst. Weitere vorteilhafte Ausführungen der Erfindung sind in den Unteransprüchen dargelegt.

Das Gerichtssaal-Mediensystem weist eine Anzeigeeinrichtung mit Whiteboard-Funktion, eine zentrale Steuereinheit und einen Client auf, wobei der Client Zugriff auf einen Speicher hat und eine Eingabevorrichtung umfasst, wobei vom Client ein Steuerbefehl auslösbar ist, der die Speicherung der Bildinhalte der Anzeigeeinrichtung mit Whiteboard-Funktion auslöst.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das Gerichtssaal-Mediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

In einer Weiterbildung der Erfindung weist das Gerichtssaal-Mediensystem eine separate Steuereinheit auf. Die separate Steuereinheit ist mit dem Control-Panel bedienbar. Auf der separaten Steuereinheit sind die Steuerbefehle zur Bedienung des Control-Panels gespeichert. Zur Eingabe von Befehlen an die separate Steuereinheit ist die separate Steuereinheit mit einem Control-Panel verbunden. Ein Bediener kann mittels des Control-Panels einen oder mehrere Anschlüsse als Quellen eines Bild- und/oder Toninhaltes auswählen und ein oder mehrere Anschlüsse als Ausgabeeinrichtungen auswählen, über die der empfangene Bild- und/oder Toninhalt ausgegeben wird. Auf der separaten Steuereinheit ist außerdem die Konfiguration für die Steuerung der Matrix-Schaltung gespeichert. Die Konfiguration beinhaltet insbesondere Art und Anordnung der Ausgabeeinrichtungen sowie der Quellen.

In einer weiteren Ausführung der Erfindung weist das Gerichtssaal-Mediensystem eine Matrix-Schaltung mit einer Mehrzahl von Anschlüssen für Quellen auf. Die Matrix-Schaltung weist eine Mehrzahl von Quell-Schnittstellen für den separaten Anschluss von Quellen auf, an denen eine Mehrzahl von Quellen angeschlossen sind und über die Bild- und/oder Toninhalte empfangbar sind.

In einer Weiterbildung der Erfindung weist das Gerichtssaal-Mediensystem eine Mehrzahl an Ausgabeeinrichtungen auf. Die Matrix-Schaltung weist außerdem eine Mehrzahl von Ausgabe-Schnittstellen für den separaten Anschluss von Ausgabeeinrichtungen auf. Über die Ausgabe-Schnittstellen sind die Bild- und/oder Toninhalte ausgebbar.

Die Steuereinheit ist über die Steuerungsausgangsschnittstelle und die Steuerungseingangsschnittstelle an die Matrix-Schaltung angeschlossen. Auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der separaten Steuereinheit sind außerdem die Steuerbefehle der an die Matrix-Schaltung angeschlossenen Ausgabeeinrichtungen und Quellen gespeichert.

Die erfindungsgemäße Gerichtssaal-Mediensystemsteuerung weist ebenfalls ein Control-Panel auf, das über die Control-Schnittstelle an die zentrale Steuereinheit angeschlossen ist. Das Control-Panel ist die zentrale Kontroll- bzw. Steuerungskomponente für die Steuerung des erfindungsgemäßen Gerichtssaal-Mediensystems. Es wird von dem Vorsitzenden oder einer dafür bestimmten Person bedient. Das Control-Panel ist im Gerichtssaal selbst angeordnet und wird in einer optionalen Ausgestaltung der Erfindung am Platz des Vorsitzenden angeordnet, kann aber an den Arbeitsplatz einer beauftragten Person weitergeleitet werden. In einer weiteren optionalen Ausgestaltung der Erfindung ist das Control-Panel ausschließlich aus dem Gerichtssaal heraus steuerbar. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Die Matrix-Schaltung weist in einer weiteren Ausgestaltung der Erfindung eine Mehrzahl von Ausgabe-Schnittstellen für den separaten Anschluss von Ausgabeeinrichtungen auf. Über die Ausgabe-Schnittstellen sind die Bild- und/oder Toninhalte ausgebbar. Mittels der Matrix-Schaltung werden die von den Quellen gelieferten Bild- und/oder Toninhalte derart geschaltet, dass die Bild- und Toninhalte auf allen, einer Mehrzahl oder auch nur auf einer einzelnen Ausgabeeinrichtung ausgegeben werden. Alle Quellen und ebenso alle Ausgabeeinrichtungen sind dabei mit der Matrix-Schaltung verbunden. Die Anbindung der zu steuernden Geräte kann über Ethernet, RS-232, Infrarot, Relais oder generelle I/O Ports erfolgen.

In einer weiteren Ausgestaltung der Erfindung weist die separate Steuereinheit eine Steuerungsausgangsschnittstelle und/oder eine Control-Schnittstelle auf. Der Anschluss kann über Ethernet, RS-232, Infrarot, Relais oder generelle I/O Ports erfolgen.

In einer Weiterbildung der Erfindung ist das Control-Panel über die Control-Schnittstelle an die separate Steuereinheit angeschlossen. Das Control-Panel ist daher direkt an der separaten Steuereinheit angeschlossen, nicht an der Matrix-Schaltung. Bediener des Control-Panels die von der steuerbaren Quelle empfangenen Bild- und/oder Toninhalte bearbeiten. Insbesondere können die angezeigten Bild- und/oder Toninhalte über die separate Steuereinheit z.B. ausgeschnitten und/oder zugeschnitten werden und/oder die Lautstärke geändert werden.

In einer weiteren Ausbildung der Erfindung ist eine Ausgabeeinrichtung eine Master-Ausgabeeinrichtung. Die Master-Ausgabeeinrichtung ist üblicherweise im Sichtfeld nur einer Person angeordnet und gibt Bild- und/oder Toninhalte vorzugsweise nur dieser Person aus. Diese Person ist vorzugsweise der Vorsitzende Richter.

In einer weiteren Gestaltung der Erfindung ist das Control-Panel an der Master-Ausgabeeinrichtung angeschlossen. Der Vorsitzende Richter kann so die empfangenen Bild- und/oder Toninhalte, die auf der Master-Ausgabeeinrichtung angezeigt werden, prüfen und mittels Eingabe auf dem Control-Panel über die separate Steuerung auf weiteren Ausgabeeinrichtungen ausgeben. Zusätzlich kann der Vorsitzende Richter mittels der Master-Ausgabeeinrichtung die ausgewählten und auf der Master-Ausgabeeinrichtung angezeigten Bild- und/oder Toninhalte verändern, bearbeiten und speichern, z.B. ausschneiden, zuschneiden oder die Lautstärke andern.

In einer weiteren Ausgestaltung der Erfindung umfassen die Quellen ein Laptop, eine Kamera, eine Dokumenten-Kamera, ein Videokonferenzsystem und/oder einen freien Anschluss. Eine Quelle für den Bild- und/oder Toninhalt sind ein oder mehrere Geräte, die dazu eingerichtet sind, Bild- und/oder Toninhalte aufzunehmen oder mit Geräten verbunden, die dazu eingerichtet sind, Bild- und/oder Toninhalte aufzunehmen. Die Quellen sind optional noch über Präsentationsumschalter/Video Scaler und/oder Medienplayer und/oder Audio-Mischpult verbunden. Die Quellen können auch mobile Datengeräte wie Laptops, Notebooks oder Notepads sein, auf denen Bild- und/oder Toninhalte gespeichert sind. Diese Geräte weisen üblicherweise zusätzlich integrierte Kameras und Mikrophone auf, die Bild- und/oder Toninhalte aufnehmen können.

In einer weiteren vorteilhaften Ausführung der Erfindung ist eine der Quellen über die Steuereinheit durch das Control-Panel steuerbar. Über das Bedienelement des Control-Panels kann der Bediener des Control-Panels die von der steuerbaren Quelle empfangenen Bild- und/oder Toninhalte bearbeiten. Insbesondere können die angezeigten Bild- und/oder Toninhalte über die separate Steuereinheit z.B. ausgeschnitten und/oder zugeschnitten werden und/oder die Lautstärke geändert werden.

Ausführungsbeispiele des erfindungsgemäßen Gerichtssaal-Mediensystems und des erfindungsgemäßen Verfahrens zur Steuerung einer Anzeigeeinrichtung mit Whiteboard-Funktion sind in den Zeichnungen schematisch vereinfacht dargestellt und werden in der nachfolgenden Beschreibung näher erläutert.

Es zeigen:
- Fig. 1:: Anschlussplan des erfindungsgemäßen Gerichtssaal-Mediensystems mit zwei Ausgabeeinrichtungen
- Fig. 2: Anschlussplan des erfindungsgemäßen Gerichtssaal-Mediensystems mit zwei Ausgabeeinrichtungen und einer Anzeigeeinrichtung mit gekoppelter Whiteboard-Funktion
- Fig. 3:: Anschlussplan des erfindungsgemäßen Gerichtssaal-Mediensystems mit zwei Ausgabeeinrichtungen und einer Anzeigeeinrichtung mit externer Whiteboard-Funktion
- Fig. 4:: Anschlussplan des erfindungsgemäßen Gerichtssaal-Mediensystems mit fünf Ausgabeeinrichtungen, einer Anzeige mit Whiteboardfunktion und einem Control-Panel
- Fig. 5a:: Anordnung und Kopplung der Komponenten des erfindungsgemäßen Gerichtssaal-Mediensystems mit einer Anzeigeeinrichtung mit gekoppelter Whiteboard-Funktion
- Fig.5b:: Anordnung und Kopplung der Komponenten des erfindungsgemäßen Gerichtssaal-Mediensystems mit einer Anzeigeeinrichtung mit externer Whiteboard-Funktion
- Fig. 6:: Anordnung der Komponenten eines erfindungsgemäßen Gerichtssaal-Mediensystems in einem Gerichtssaal

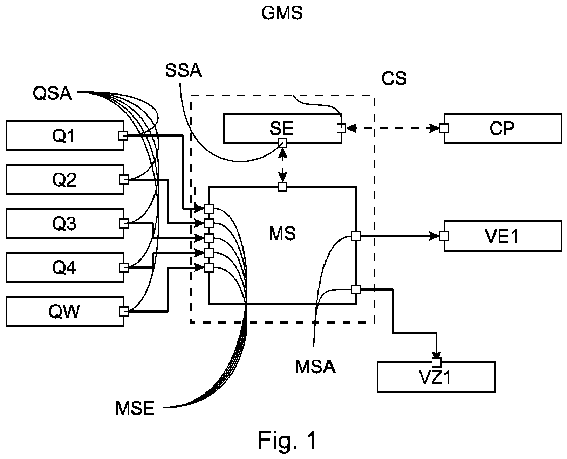

Fig. 1 zeigt eine Ansicht eines Ausführungsbeispiels des erfindungsgemäßen Gerichtssaal-Mediensystems GMS. Das erfindungsgemäße Gerichtssaal-Mediensystem GMS weist die Matrix-Schaltung MS auf. Die Matrix-Schaltung MS weist eine Mehrzahl von Anschlüssen in Form von Quell-Schnittstellen MSE auf, über die die Matrix-Schaltung MS mit den Quellen Q1, Q2, Q3, Q4, QW verbunden ist. Jede Quell-Schnittstelle MSE ist mit genau einer Quelle Q1, Q2, Q3, Q4, QW verbunden. Jede Quelle Q1, Q2, Q3, Q4, QW weist dazu jeweils eine Schnittstelle QSA auf.

Die Matrix-Schaltung MS weist außerdem zwei Ausgabe-Schnittstellen MSA auf, mit denen jeweils eine Ausgabeeinrichtung VE1, VZ1 verbunden ist. Die erste Ausgabeeinrichtung VE1 ist in diesem Ausführungsbeispiel eine Ausgabeeinrichtung, die für die Richter zur Verfügung steht. Die erste Ausgabeeinrichtung VE1 dient ebenfalls als ein Ausgabeeinrichtung für die Justizmitarbeiter, aber auch als Regiemonitor, auf dem die für die zweite Ausgabeeinrichtung VZ1 bestimmten Bild- und Toninhalte angezeigt werden können. Die zweite Ausgabeeinrichtung VZ1 ist z.B. eine Ausgabeeinrichtung die für die Öffentlichkeit bestimmte Bild- und Toninhalte anzeigt. Die zweite Ausgabeeinrichtung VZ1 kann sich in einem anderen Raum als die erste Ausgabeeinrichtung VE1 befinden. Alle Ausgabeeinrichtungen VE1, VZ1 weisen Komponenten zur Darstellung von Bildinhalten und/oder Toninhalten auf und/oder sind mit solchen verbunden. Jede Ausgabeeinrichtung VE1, VZ1 weist ebenfalls eine Schnittstelle QSA auf.

Über die Steuerungseingangsschnittstelle MSS ist die Matrix-Schaltung MS mit der separaten Steuereinheit SE verbunden. Die separate Steuereinheit SE weist dazu die Steuerungsausgangsschnittstelle SSA auf. Für den Anschluss eines Control-Panels CP weist die separate Steuereinheit SE die Control-Schnittstelle CS auf, die mit der Ausgabe-Schnittstelle CPS des Control-Panels CP verbunden ist. Das Control-Panel CP weist eine eigene Anzeige sowie ein Bedienelement auf. Auf der separaten Steuereinheit SE ist die Konfiguration für die Steuerungslogik gespeichert. Die Anbindung der zu steuernden Ausgabeeinrichtungen VE1, VZ1 und Quellen Q1, Q2, Q3, Q4, QW kann über Ethernet, RS-232, Infrarot, Relais oder generelle I/O Ports erfolgen. Die Steuerungslogik wird über eine Cloud bereitgestellt und kann in einen Speicher der separaten Steuereinheit SE geladen werden.

Zur Darstellung von Bild- und/oder Toninhalten auf einer der beiden Ausgabeeinrichtungen VE1, VZ1 wird im ersten Verfahrensschritt ein Bild- und/oder Toninhalt von der Matrix-Schaltung MS empfangen. Die Bild- und Toninhalte werden von den Quellen Q1, Q2, Q3, Q4, QW geliefert. Die Quellen Q1, Q2, Q3, Q4, QW sind Kameras und/oder Mikrophone, die optional noch über Präsentationsumschalter/Video Scaler und/oder Medienplayer und/oder Audio-Mischpult mit der Matrix-Schaltung MS verbunden sind. Die Quellen Q1, Q2, Q3, Q4, QW können auch mobile Datengeräte wie Laptops, Notebooks oder Notepads sein. Diese Geräte weisen üblicherweise auch integrierte Kameras und Mikrophone auf.

Über das Bedienelement des Control-Panels CP wird der auf den Ausgabeeinrichtungen VE1, VZ1 anzuzeigende Bild- und/oder Toninhalt ausgewählt. Das Control-Panel CP wird üblicherweise von dem Vorsitzenden Richter und/oder einer dafür bestimmten Person bedient. Der Bediener wählt auf dem Control-Panel eine Quelle Q1, Q2, Q3, Q4, oder QW unter den an die Matrix-Schaltung MS angeschlossenen Quellen Q1, Q2, Q3, Q4, QW aus.

In diesem Ausführungsbeispiel ist die Quelle QW als konventionelles Whiteboard ausgestaltet, auf dem annotierte Inhalte dargestellt und über das Gerichtssaalmediensystem GMS geteilt werden können. Über das Control-Panel CP können die annotierten Inhalte gespeichert und in der digitalen Gerichtsakte abgelegt werden. Hierfür muss der annotierte Inhalt nicht auf der Anzeigeeinrichtung des Control-Panels CP ausgegeben werden.

Die Steuerung der Gerichtssaal-Mediensystemsteuerung GMS erfolgt über ein Control-Panel CP. Der Vorsitzende Richter kann mittels des Control-Panels CP die gesamte Technik der Gerichtssaal- Mediensystemsteuerung GMS im Sitzungssaal steuern. Hierfür ist das Control-Panel ist im Gerichtssaal selbst angeordnet und wird am Platz des Vorsitzenden angeordnet. Es ist aber auch möglich, diese Steuerung über das Control-Panel CP an eine andere Person zu übertragen, so dass der Vorsitzende damit nicht zusätzlich belastet wird.

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

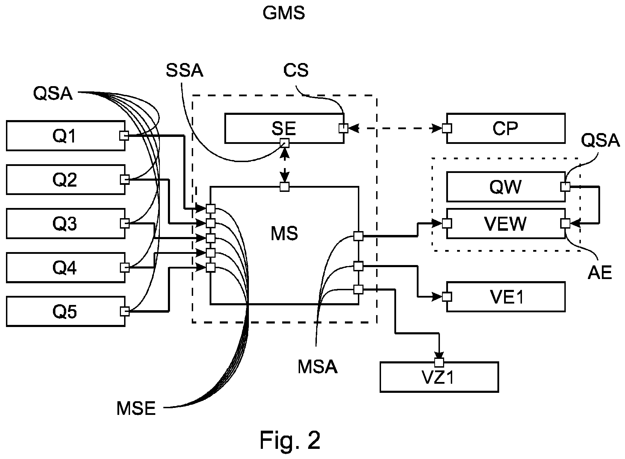

Ein weiteres Ausführungsbeispiel des erfindungsgemäßen Gerichtssaal-Mediensystems GMS zeigt Fig. 2. Das erfindungsgemäße Gerichtssaal-Mediensystem GMS weist ebenfalls die Matrix-Schaltung MS auf. Mit der Matrix-Schaltung MS sind fünf Quellen Q1, Q2, Q3, Q4, Q5 über jeweils eine Eingabe-Schnittstelle MSE verbunden. Jede Quelle Q1, Q2, Q3, Q4, Q5 weist dazu eine Ausgabe-Schnittstelle QSA auf.

Die Matrix-Schaltung MS weist außerdem drei Ausgabe-Schnittstellen MSA auf, mit denen jeweils eine Ausgabeeinrichtung VE1, VZ1, VEW verbunden ist. Die erste Ausgabeeinrichtung VE1 ist eine Ausgabeeinrichtung, die für den Vorsitzenden Richter zur Verfügung steht. Die zweite Ausgabeeinrichtung VZ1 ist dafür eingerichtet, Bild- und/oder Toninhalte den Prozessbeteiligten auszugeben. Die Anzeigeeinrichtung VEW mit Whiteboard-Funktion ist über die Matrix-Schaltung MS mit der separaten Steuereinheit SE steuerbar verbunden, wobei die Whiteboard-Funktion, insbesondere die Annotationsfunktion, von der separaten Steuereinheit SE gesteuert wird.

Die Anzeigeeinrichtung VEW mit Whiteboard-Funktion ist ebenfalls von allen Prozessbeteiligten einsehbar und mit der Quelle QW, die wie im vorherstehenden Ausführungsbeispiel als Whiteboard zur Eingabe von annotierten Bild- und/oder Toninhalten ausgeführt ist, in einem Gerät angeordnet. Die Verbindung von Quelle QW und Anzeigeeinrichtung VEW erfolgt durch die Ausgabe-Schnittstelle QSA und die Eingabe-Schnittstelle AE.

Die Matrix-Schaltung MS ist mit der separaten Steuereinheit SE verbunden. Die separate Steuereinheit SE weist dazu die Steuerungsausgangsschnittstelle SSA auf. Für den Anschluss eines Control-Panels CP weist die separate Steuereinheit SE die Control-Schnittstelle CS auf, die mit der Ausgabe-Schnittstelle CPS des Control-Panels CP verbunden ist.

Über das Bedienelement des Control-Panels CP werden sowohl eine der Quellen Q1, Q2, Q3, Q4, Q5, QW zum Empfang der Bild- und/oder Toninhalte als auch die die empfangenen Bild- und/oder Toninhalte ausgebenden Ausgabeeinrichtungen VE1, VZ1, VEW ausgewählt.

Zur Steuerung der Anzeigeeinrichtung VEW mit Whiteboard-Funktion wird durch die Quelle QW ein annotierter Bild- und/oder Toninhalt bereitgestellt, z.B. ein Kamerabild eines Zeugen oder ein Dokument eines Gutachters. Dieser Bild- und/oder Toninhalt wird auf der Anzeigeeinrichtung VEW ausgegeben, auf der die Whiteboard-Funktion bereitgestellt ist. Beispielsweise ein Zeuge und/oder Gutachter kann den auf der Anzeigeeinrichtung VEW ausgegebenen Bild- und/oder Toninhalt auf der Quelle QW annotieren. Durch Anwählen einer oder einer Mehrzahl von Ausgabeeinrichtungen VE1, VZ1, VEW kann der auf der Anzeigeeinrichtung VEW ausgegebene Bild- und/oder Toninhalt auch zeitgleich oder zeitversetzt auf weiteren Ausgabeeinrichtungen VE1, VZ1 ausgegeben werden.

Der Bediener des Control-Panels CP ist jederzeit in der Lage, den auf der Anzeigeeinrichtung VEW ausgegebenen annotierten Bild- und/oder Toninhalt durch eine Eingabe in das Bedienelement des Control-Panels CP zu speichern. Auf der mit dem Control-Panel CP verbundenen separaten Steuereinheit SE wird ein entsprechendes Programm ausgeführt. Die Speichereinrichtung zur Speicherung des annotierten Bild- und/oder Toninhaltes ist mit der separaten Steuereinheit SE verbunden. Die Speichereinrichtung ist üblicherweise in der separaten Steuereinheit angeordnet, alternativ oder zusätzlich ist die Speichereinrichtung ein Netzlaufwerk und/oder eine Cloud.

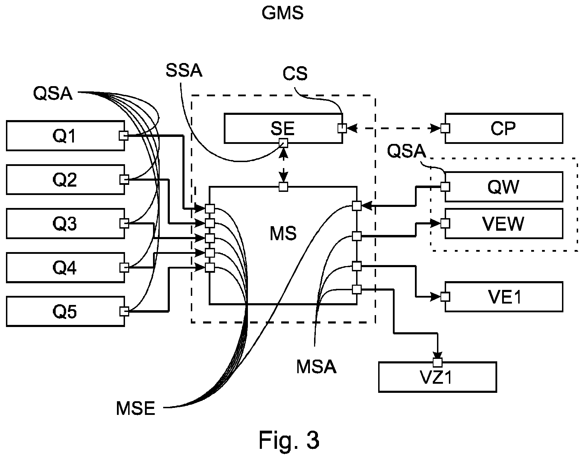

Fig. 3 zeigt eine vorteilhafte Variante des vorherstehenden Ausführungsbeispiels (s. Fig. 2) des erfindungsgemäßen Gerichtssaal-Mediensystems GMS, wobei die Quelle QW mit Whiteboard-Funktion nicht direkt mit der Anzeigeeinrichtung VEW verbunden ist, wobei Quelle QW und Anzeigeeinrichtung VEW ebenfalls in einem Gerät angeordnet sind. Die Quelle QW ist mit der Matrix-Schaltung MS über die Ausgabe-Schnittstelle QSA mit der Eingabe-Schnittstelle MSE verbunden. Die Anzeigeeinrichtung VEW mit Whiteboard-Funktion ist ebenfalls direkt mit der Matrix-Schaltung MS über eine Ausgabe-Schnittstelle MSA verbunden. Die Quelle QW und die Anzeigeeinrichtung VEW kommunizieren also getrennt voneinander mit der Matrix-Schaltung MS.

Zur Steuerung der Anzeigeeinrichtung VEW mit Whiteboard-Funktion wird durch eine Quelle Q1, Q2, Q3, Q4, Q5, QW ein Bild- und/oder Toninhalt bereitgestellt, wobei die Quelle QW einen annotierten Inhalt bereitstellt. Über das Bedienelement des Control-Panels CP kann der Bediener des Control-Panels CP sowohl die Quelle Q1, Q2, Q3, Q4, Q5, QW als auch die Ausgabeeinrichtung VE1, VZ1, VEW auswählen, auf denen der Bild- und/oder Toninhalt ausgegeben wird. Der annotierte Bild- und/oder Toninhalt, der von der Quelle QW bereitgestellt wird, wird auf der Anzeigeeinrichtung VEW ausgegeben. Durch eine Eingabe in das Bedienelement des Control-Panels CP wird der annotierte Bild- und/oder Toninhalt gespeichert.

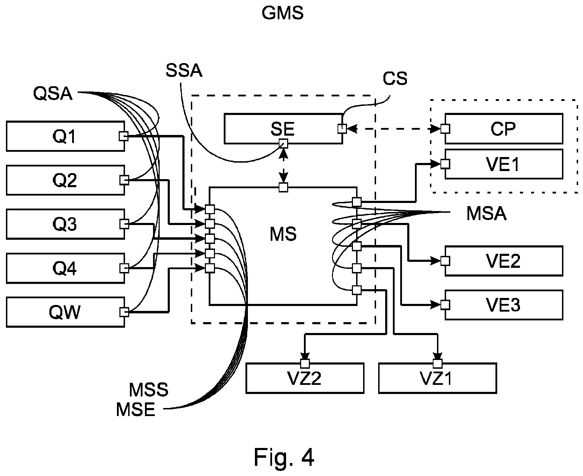

Ein weiteres Ausführungsbeispiel des erfindungsgemäßen Gerichtssaal-Mediensystems GMS zeigt Fig. 4. Das erfindungsgemäße Gerichtssaal-Mediensystem GMS weist ebenfalls die Matrix-Schaltung MS auf. Mit der Matrix-Schaltung MS sind fünf Quellen Q1, Q2, Q3, Q4, QW über jeweils eine Eingabe-Schnittstelle MSE verbunden. Jede Quelle Q1, Q2, Q3, Q4, QW weist dazu eine Ausgabe-Schnittstelle QSA auf.

Die Matrix-Schaltung MS weist außerdem fünf Ausgabe-Schnittstellen MSA auf, mit denen jeweils eine Ausgabeeinrichtung VE1, VE2, VE3, VZ1, VZ2 verbunden ist. Eine erste Ausgabeeinrichtung VE1 ist eine Ausgabeeinrichtung, die für den Vorsitzenden Richter zur Verfügung steht und mit dem Control-Panel CP in einem Gerät angeordnet ist. Die beiden weiteren ersten Ausgabeeinrichtungen VE2, VE3 sind dafür eingerichtet, Bild- und/oder Toninhalte den Prozessbeteiligten auszugeben. Die zweiten Ausgabeeinrichtung VZ1, VZ2 sind Ausgabeeinrichtungen, die für die Öffentlichkeit bestimmte Bild- und Toninhalte anzeigen. Jede Ausgabeeinrichtung VE1, VE2, VE3, VZ1, VZ2 weist ebenfalls eine Schnittstelle auf.

Über das Bedienelement des Control-Panels CP werden sowohl eine der Quellen Q1, Q2, Q3, Q4, QW zum Empfang der Bild- und/oder Toninhalte als auch die die empfangenen Bild- und/oder Toninhalte ausgebenden Ausgabeeinrichtungen VE1, VE2, VE3, VZ1, VZ2 ausgewählt. Die Quelle QW ist als konventionelles Whiteboard ausgestaltet, auf dem annotierte Inhalte dargestellt und über das Gerichtssaalmediensystem GMS auf einer oder mehreren der Ausgabeeinrichtungen VE1, VE2, VE3, VZ1, VZ2 ausgegeben werden können. Über das Control-Panel CP können die annotierten Inhalte gespeichert werden

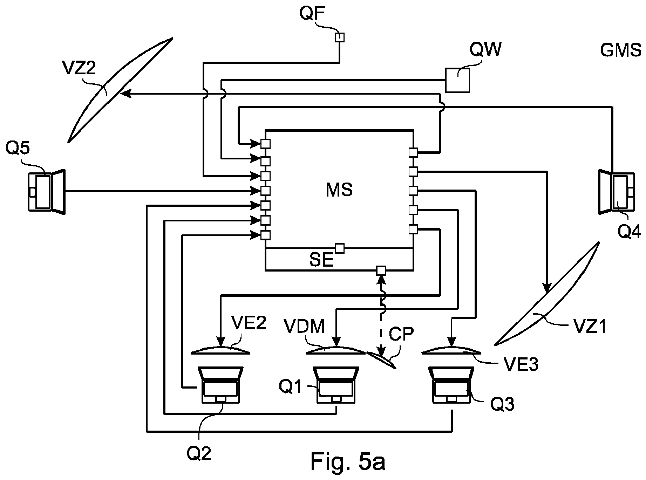

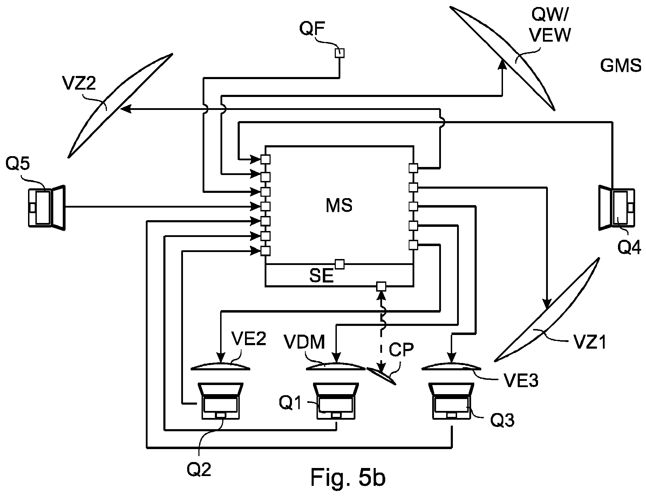

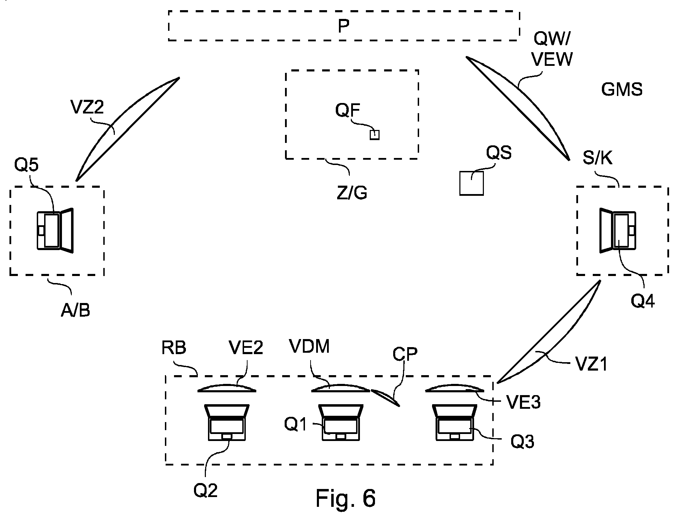

Fig. 5 und Fig. 6 zeigen eine beispielhafte Anordnung eines Ausführungsbeispiels des erfindungsgemäßen Gerichtssaal-Mediensystem GMS in einem Gerichtssaal. Der Gerichtssaal weist einen öffentlich zugänglichen Bereich für Zuschauer P, eine Richterbank RB mit jeweils einem Platz für den Vorsitzenden Richter und zwei Beisitzern, einen Bereich Z/G für Zeugen bzw. Gutachter, sowie jeweils einen Bereich für die Prozessparteien, Klage S/K und Verteidigung A/B, auf (Fig. 6).

Das Gerichtssaal-Mediensystem GMS weist als zentrales Element die Matrix-Schaltung MS auf, mit der sämtliche Quellen Q1, Q2, Q3, Q4, Q5, QF, QW, QS über Quell-Schnittstellen QSA verbunden sind (Fig. 5). Die Quellen Q1, Q2, Q3, Q4, Q5, QF, QW, QS sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien A/B, S/K. Außerdem ist mit der Matrix-Schaltung MS eine freie Quelle QF verbunden, mit der z.B. ein Endgerät eines Gutachters zeitweise an das Gerichtssaal-Mediensystem GMS angeschlossen werden kann. Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes.

Mit der Matrix-Schaltung MS sind weiterhin die Ausgabeeinrichtungen VDM, VE2, VE3, VZ1, VZ2, VEW über Ausgabe-Schnittstellen MSA angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben. Die zweiten Ausgabeeinrichtungen VZ1, VZ2 sind öffentlich zugängliche Ausgabeeinrichtungen, in diesem Ausführungsbeispiel Großbildschirme oder Leinwände. Die Anzeigeeinrichtung VEW mit Whiteboard-Funktion und Quelle QW sind in diesem Ausführungsbeispiel in einem Gerät angeordnet, wobei die Quelle QW annotierte Bild- und/oder Toninhalte bereitstellt.

Die Steuerung des Gerichtssaal-Mediensystem GMS erfolgt über ein Control-Panel CP. Der Vorsitzende Richter kann mittels des Control-Panel CP die gesamte Technik des Gerichtssaal-Mediensystem GMS im Sitzungssaal steuern. Es ist aber auch möglich, diese Steuerung über das Control-Panel CP an eine andere Person zu übertragen, so dass der Vorsitzende damit nicht zusätzlich belastet wird.

Der Bediener des Control-Panels CP wählt mittels des Bedienelements des Control-Panels CP eine der Quellen Q1, Q2, Q3, Q4, Q5, QW, QF zum Empfang der Bild- und/oder Toninhalte. Diese Auswahl wird von dem Control-Panel CP an die separate Steuereinheit SE gesendet. Die empfangenen Bild- und/oder Toninhalte werden dabei nicht auf der Anzeige des Control-Panel CP selbst angezeigt, sondern zunächst auf der Master-Ausgabeeinrichtung VDM, die eine Vorschaufunktion ausübt. Hier kann der Vorsitzende Richter die empfangenen Bild- und/oder Toninhalte prüfen. Zusätzlich kann der Vorsitzende Richter mittels der Master-Ausgabeeinrichtung VDM die ausgewählten und auf der Master-Ausgabeeinrichtung VDM angezeigten Bild- und/oder Toninhalte verändern und bearbeiten, z.B. ausschneiden, zuschneiden oder die Lautstärke andern.

Außerdem kann der Vorsitzende Richter die von der steuerbaren Quelle QF empfangenen Bild- und/oder Toninhalte ebenfalls in gleicher Weise mittels des Control-Panels CP bearbeiten. Im Anschluss wählt der Vorsitzende Richter oder der Bediener des Control-Panels CP mittels des Control-Panels CP eine oder eine Mehrzahl der Ausgabeeinrichtungen VDM, VE2, VE3, VEW, VZ1, VZ2 zur Ausgabe der von der ausgewählten Quelle Q1, Q2, Q3, Q4, Q5, QW, QF empfangenen Bild- und/oder Toninhalte aus. Die empfangenen Bild- und/oder Toninhalte werden dann auf der oder den ausgewählten Ausgabeeinrichtungen VDM, VE2, VE3, VEW, VZ1, VZ2 angezeigt.

Der Bediener des Control-Panels CP kann jederzeit den auf der Anzeigeeinrichtung VEW annotierten Bild- und/oder Toninhalt durch eine Eingabe in das Bedienelement des Control-Panels CP speichern. In diesem Ausführungsbeispiel wird der annotierte Bild- und/oder Toninhalt von der Quelle QW bereitgestellt, zusätzlich kann der Bediener des Control-Panels CP jeden auf der Anzeigeeinrichtung VEW ausgegeben Bild- und/oder Toninhalt mittels einer Eingabe in das Control-Panel CP speichern. In einer weiteren vorteilhaften Ausführung kann der Bediener des Control-Panels CP jeden auf einer Anzeigeeinrichtung VDM, VE2, VE3, VEW, VZ1, VZ2 ausgegeben Bild- und/oder Toninhalt mittels einer Eingabe in das Control-Panel CP speichern.

| | |
|---|---|
| GMS | Gerichtssaal-Mediensystem |
| VE1, VE2, VE3, VE4, VE5 | Erste Ausgabeeinrichtung |
| VDM | Master-Ausgabeeinrichtung |
| VZ1, VZ2 | Zweite Ausgabeeinrichtung |
| VEW | Anzeigeeinrichtung mit Whiteboard-Funktion |
| MSA | Ausgabe-Schnittstelle der Matrix-Schaltung |
| MS | Matrix-Schaltung |
| MSE | Eingabe-Schnittstelle der Matrix-Schaltung |
| MSS | Steuerungseingangsschnittstelle |
| SE | Separate Steuereinheit |
| SSA | Steuerungsausgangsschnittstelle |
| CS | Control-Schnittstelle |
| CPS | Ausgabe-Schnittstelle Control-Panel |
| CP | Control-Panel |
| Q1, Q2, Q3, Q4, Q5, Q6 | Quelle |
| QS | Steuerbare Quelle |
| QF | Freie Quelle |
| QW | Whiteboard-Quelle |
| QSA | Quell-Schnittstelle |
| AE | Eingabe-Schnittstelle |
| RB | Richterbank |
| P | Zuschauerbereich |
| Z/G | Bereich für Zeugen und Gutachter |
| S/K | Bereich für Staatsanwalt/Klage |
| A/B | Bereich für Verteidigung |

## Patentansprüche

1. Verfahren zur Steuerung einer Anzeigeeinrichtung (VEW) mit Whiteboard-Funktion mit den Verfahrensschritten
• Ausgabe von Bildinhalten auf einer Anzeigeeinrichtung (VEW)
• Bereitstellen einer Whiteboard-Funktion zum Hinzufügen von Bildinhalten zu dem ausgegebenen Bildinhalt
• Speichern der annotierten Bildinhalte
wobei das Speichern der annotierten Bildinhalte über einen Client ausgelöst wird, dessen Ausgabeeinrichtung im Moment des Auslösens des Speicherns ausschließlich andere als die annotierten Bildinhalte ausgibt.

2. Verfahren zur Steuerung einer Anzeigeeinrichtung (VEW) mit Whiteboard-Funktion mit den Verfahrensschritten nach Anspruch 1,
**dadurch gekennzeichnet, dass**
die Whiteboard-Funktion über eine zentrale Steuereinheit (SE) bereitgestellt wird, die mit der Anzeigeeinrichtung (VEW) mit Whiteboard-Funktion gekoppelt ist, wobei die Steuereinheit hierbei die Ausgabeinhalte auf der Anzeigeeinrichtung (VEW) mit Whiteboard-Funktion und die Whiteboard-Funktion zur Annotation der Bildinhalte der Anzeigeeinrichtung (VEW) mit Whiteboard-Funktion steuert.

3. Verfahren zur Steuerung einer Anzeigeeinrichtung (VEW) mit Whiteboard-Funktion mit den Verfahrensschritten nach einem oder mehreren der vorhergehenden Ansprüche,
**dadurch gekennzeichnet, dass**
die Speicherung des Bildinhaltes der Anzeigeeinrichtung (VEW) mit Whiteboard-Funktion von einem mit der zentralen Steuereinheit (SE) verbundenen Master-Client ausgelöst wird.

4. Verfahren zur Steuerung einer Anzeigeeinrichtung (VEW) mit Whiteboard-Funktion mit den Verfahrensschritten nach einem oder mehreren der vorhergehenden Ansprüche,
**dadurch gekennzeichnet, dass**
der Client eine Ausgabeeinrichtung und eine Eingabeeinrichtung umfasst,
wobei der Client mit einer Speichervorrichtung verbunden ist.

5. Verfahren zur Steuerung einer Anzeigeeinrichtung (VEW) mit Whiteboard-Funktion mit den Verfahrensschritten nach einem oder mehreren der vorhergehenden Ansprüche,
**dadurch gekennzeichnet, dass**
der annotierte Bildinhalt auf der Speichereinrichtung des Clients gespeichert wird, wobei die Speichereinrichtung des Clients ein mit dem Client verbundenes Netzwerklaufwerk ist.

6. Verfahren zur Steuerung einer Anzeigeeinrichtung (VEW) mit Whiteboard-Funktion mit den Verfahrensschritten nach einem oder mehreren der vorhergehenden Ansprüche,
**dadurch gekennzeichnet, dass**
auf der Ausgabeeinrichtung des Clients Bildinhalte angezeigt werden, die von den Bildinhalten der auf der Anzeigeeinrichtung (VEW) mit Whiteboard-Funktion ausgegebenen Bildinhalten verschieden sind.

7. Verfahren zur Steuerung einer Anzeigeeinrichtung (VEW) mit Whiteboard-Funktion mit den Verfahrensschritten nach einem oder mehreren der vorhergehenden Ansprüche,
**dadurch gekennzeichnet, dass**
die Speicherung der annotierten Bildinhalte von einem Control-Panel (CP) mit eigenem Display ausgelöst wird,
wobei das Control-Panel (CP) die Anzeigeinhalte weiterer Ausgabeeinrichtungen (VDM, VE1, VE2, VE3, VE4, VE5, VZ1, VZ2) steuert,
wobei die weiteren Ausgabeeinrichtungen (VDM, VE1, VE2, VE3, VE4, VE5, VZ1, VZ2) Anzeigeeinrichtungen umfassen, die von einer Mehrzahl von Positionen eines Gerichtssaales einsehbar sind,
wobei die Positionen die Richterbank (RB), die Klägerbereich (S/K), den Angeklagtenbereich (A/B), den Zeugenstand (Z/G) und/oder den Zuschauerbereich (P) umfassen, und
wobei auf den weiteren Ausgabeeinrichtungen (VDM, VE1, VE2, VE3, VE4, VE5, VZ1, VZ2) Bildinhalte der Anzeigeeinrichtung (VEW) mit Whiteboard-Funktion gespiegelt werden.

8. Gerichtssaal-Mediensystem (GMS) mit einer Anzeigeeinrichtung (VEW) mit Whiteboard-Funktion, einer zentralen Steuereinheit (SE) und einem Client, wobei der Client Zugriff auf einen Speicher hat und eine Eingabevorrichtung umfasst, wobei vom Client ein Steuerbefehl auslösbar ist, der die Speicherung der Bildinhalte der Anzeigeeinrichtung (VEW) mit Whiteboard-Funktion auslöst.

9. Gerichtssaal-Mediensystem (GMS) mit einer Anzeigeeinrichtung (VEW) mit Whiteboard-Funktion nach Anspruch 8
**dadurch gekennzeichnet, dass**
das Gerichtssaal-Mediensystem (GMS) eine separate Steuereinheit (SE) aufweist, die separate Steuereinheit (SE) mit dem Control-Panel (CP) bedienbar ist.

10. Gerichtssaal-Mediensystem (GMS) mit einer Anzeigeeinrichtung (VEW) mit Whiteboard-Funktion nach Anspruch 8 oder 9
**dadurch gekennzeichnet, dass**
das Gerichtssaal-Mediensystem (GMS) eine Matrix-Schaltung (MS) mit einer Mehrzahl von Anschlüssen (MSE) für Quellen (Q1, Q2, Q3, Q4, Q5, Q6, QS, QW) aufweist.

11. Gerichtssaal-Mediensystem (GMS) mit einer Anzeigeeinrichtung (VEW) mit Whiteboard-Funktion nach einem oder mehreren der Ansprüche 8 bis 10,
**dadurch gekennzeichnet, dass**
das Gerichtssaal-Mediensystem eine Mehrzahl von Ausgabeeinrichtungen (VDM, VE1, VE2, VE3, VE4, VE5, VZ1, VZ2) aufweist,
wobei die Mehrzahl von Ausgabeeinrichtungen (VDM, VE1, VE2, VE3, VE4, VE5, VZ1, VZ2) an die Matrix-Schaltung (MS) angeschlossen ist,
wobei die separate Steuereinheit (SE) an die Matrix-Schaltung (MS) angeschlossen ist, und
wobei das Control-Panel (CP) an die separate Steuereinheit (SE) angeschlossen ist.

12. Gerichtssaal-Mediensystem (GMS) mit einer Anzeigeeinrichtung (VEW) mit Whiteboard-Funktion nach einem oder mehreren der Ansprüche 8 bis 11,
**dadurch gekennzeichnet, dass**
die separate Steuereinheit (SE) eine Steuerungsausgangsschnittstelle (SSA) und/oder eine Control-Schnittstelle (CS) aufweist.

13. Gerichtssaal-Mediensystem (GMS) mit einer Anzeigeeinrichtung (VEW) mit Whiteboard-Funktion nach einem oder mehreren der Ansprüche 8 bis 12,
**dadurch gekennzeichnet, dass**
das Control-Panel (CP) über die Control-Schnittstelle (CS) an die separate Steuereinheit (SE) angeschlossen ist.

14. Gerichtssaal-Mediensystem (GMS) mit einer Anzeigeeinrichtung (VEW) mit Whiteboard-Funktion nach einem oder mehreren der Ansprüche 8 bis 13
**dadurch gekennzeichnet, dass**
eine Ausgabeeinrichtung eine Master-Ausgabeeinrichtung (VDM) ist,
wobei das Control-Panel (CP) an der Master-Ausgabeeinrichtung (VDM) angeordnet ist.

15. Gerichtssaal-Mediensystem (GMS) mit einer Anzeigeeinrichtung (VEW) mit Whiteboard-Funktion nach einem oder mehreren der Ansprüche 8 bis 14
**dadurch gekennzeichnet, dass**
die Quellen (Q1, Q2, Q3, Q4, Q5, Q6, QS, QW) einen Laptop, eine Kamera, eine Dokumenten-Kamera, ein Videokonferenzsystem und/oder einen freien Anschluss umfassen,
wobei eine der Quellen (QS) über die separate Steuereinheit (SE) durch das Control-Panel (CP) steuerbar ist.
